(19) Europäisches Patentamt
European Patent Office
Office européen des brevets

(11) EP 2 810 776 B1

(12) # EUROPÄISCHE PATENTSCHRIFT

(45) Veröffentlichungstag und Bekanntmachung des Hinweises auf die Patenterteilung:
**07.09.2022 Patentblatt 2022/36**

(21) Anmeldenummer: **14001822.7**

(22) Anmeldetag: **23.05.2014**

(51) Internationale Patentklassifikation (IPC):
***B32B 27/36*** (2006.01) ***B32B 37/00*** (2006.01)
***B32B 27/06*** (2006.01) ***B29C 55/00*** (2006.01)
***B29C 55/12*** (2006.01) *B32B 38/00* (2006.01)

(52) Gemeinsame Patentklassifikation (CPC):
**B32B 27/36; B32B 27/06;** B29C 55/005;
B29C 55/12; B32B 2038/0028; B32B 2250/03;
B32B 2250/244; B32B 2307/308; B32B 2307/31;
B32B 2307/412; B32B 2307/5825; B32B 2307/74;
B32B 2309/105; B32B 2311/24; B32B 2311/30;

(Forts.)

(54) **Antimonfreie Polyesterfolien für die Verwendung im Lebensmittelkontakt bei hohen Temperaturen**

Antimony-free polyester films for use in contact with food at high temperatures

Feuille de polyester sans antimoine à utiliser en contact avec des aliments à haute température

(84) Benannte Vertragsstaaten:
**DE FR GB IT LU NL**

(30) Priorität: **04.06.2013 DE 102013210368**

(43) Veröffentlichungstag der Anmeldung:
**10.12.2014 Patentblatt 2014/50**

(73) Patentinhaber: **Mitsubishi Polyester Film GmbH**
**65203 Wiesbaden (DE)**

(72) Erfinder:
- **Kliesch, Holger**
  **D-65462 Ginsheim-Gustavsburg (DE)**
- **Bennett, Cynthia**
  **D-55232 Alzey (DE)**
- **Kuhmann, Bodo**
  **D-65594 Runkel (DE)**
- **Konrad, Matthias**
  **D-65830 Kriftel (DE)**
- **Ünker, Yavuz**
  **D-55268 Nieder-Olm (DE)**
- **Lohre, Claudia**
  **D-65185 Wiesbaden (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A2- 2 602 283** **US-A1- 2003 236 385**
**US-A1- 2004 058 805**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 810 776 B1

(52) Gemeinsame Patentklassifikation (CPC): (Forts.)
B32B 2367/00; B32B 2439/46; B32B 2439/66;
B32B 2439/70

## Beschreibung

Die Erfindung betrifft die Auswahl und Herstellung von temperaturbeständigen Polyesterfolien für die Metalllaminierung (Can-Liner) sowie die Verpackung von Lebensmitteln, beispielsweise um diese Lebensmittel in einem Ofen z.B. einem Mikrowellenofen zu garen, ohne das Lebensmittel zuvor aus der Verpackung zu entnehmen. Hierfür geeignet sind Polyesterfolien, die aus antimonfreien Polyestern hergestellt sind und Radikalfänger enthalten. Solche Folien weisen eine hohe Temperaturresistenz auf, so dass aus ihnen hergestellte Verpackungen (z.B. Bratbeutel) mehr als eine Stunde in einem Ofen bei Temperaturen oberhalb von 180 °C verbleiben können, ohne zu verspröden.

Transparente, orientierte Polyesterfolien sind bekannt. Folien, die aus einem antimonfreien Polyester hergestellt sind, sind ebenfalls bekannt. Bratbeutel aus Polyesterfolien sind ebenfalls bekannt. Siegelfähige Folien, die eine copolyesterhaltige Siegleschicht aufweisen, sind ebenso bekannt, wie thermoformbare Polyesterfolien.

Folienbeutel zum Aufbacken von Brot oder Folienbeutel, in denen ein ganzes Fertiggericht im Ofen gegart werden soll, müssen Temperaturen von oberhalb 200 °C für mehr als eine Stunde aushalten, ohne mechanisch zu versagen (z.B. durch Aufplatzen infolge von Versprödung). Aufgrund der hohen Temperaturresistenz von Polyethylenterephthalat werden in der industriellen Praxis nahezu ausschließlich Folienbeutel aus diesem Material eingesetzt.

In WO-A-2007/054698 ist eine Folienverpackung beschrieben, in der ein Beutel (Tray) aus einer thermoformbaren Polyesterfolie mit einer siegelfähigen Polyesterfolie verschlossen wird und ein Lebensmittel in dieser Verpackung gegart wird. Sowohl die thermoformbare Folie, als auch die Siegelfähige Folie enthalten bevorzugt Copolyester. WO-A-2007/054698 macht keine Angaben zu dem Katalysator, der für die Polyesterherstellung verwendet wird. Die in den Beispielen genannten kommerziell erhältlichen Folien sind durchweg unter Verwendung von antimonhaltigen Katalysatoren hergestellt worden und enthalten keinen Radikalfänger.

Die klassischen Katalysatoren für die Herstellung von Polyestern sind nach wie vor Antimonverbindungen. Manche Antimonverbindungen können - insbesondere in höheren Konzentrationen und bei häufiger Exposition - eine gesundheitsschädliche Wirkung haben. Daher ist in der EU die maximal zulässige Migration von Antimon aus einer Folie in ein Lebensmittel beschränkt. Bei hohen Temperaturen (z.B. in Ofenanwendungen), ist die Antimonmigration erhöht und schon deswegen eine Reduktion des Antimongehaltes wünschenswert. Untersuchungen des schweizer Bundesamts für Gesundheit zeigen, dass die Migrationsgrenze für Antimon in Lebensmitteln bereits bei Ofentemperaturen von 180° C überschritten wird, teilweise sogar erheblich (s. M. Haldimann, A. Blanc und V. Dudler, in Food Additives and Contaminants, 2007; 24(8): 860-868). Sogar viel geringere Spuren von Antimon aus Polyethylenterephthalat (PET) werden in der Fachpresse als bedenklich diskutiert (z.B. W. Shotyk und M. Krachler in Environ. Sci. Technol., 2007, 41 (5), S. 1560-1563).

Eine im August und September 2011 durchgeführte Analyse von mehr als 10 verschiedenen Bratfolienbeutel und -schläuche unterschiedlicher Hersteller zeigte jedoch in allen untersuchten Fällen das Vorhandensein von Antimon, wenn auch mit 50-110 ppm reduzierten Werten gegenüber antimonhaltigen Standardfolien (Standardfolie meist > 150 ppm). Oberhalb von 10 ppm ist Antimon mit gängigen Aufschluss- und Analyseverfahren aber gut nachweisbar und eine Migration von Antimon aus einer Folie ist dann unter Auswahl geeigneter Bedingungen (hohe Temperatur > 100 °C in Lebensmitteln) ebenfalls nachweisbar.

Die Ursache dafür, dass Antimonverbindungen nach wie vor als Polykondensationskatalysatoren in Polyesterfolien eingesetzt werden, dürfte darin liegen, dass antimonfreie Folien eine wesentlich geringere Temperaturstabilität als antimonhaltige Folien aufweisen und damit als Bratbeutelfolie nicht mehr eingesetzt werden können. Die für die vorliegende Erfindung untersuchten kommerziell erhältlichen und ausschließlich aus Titan-katalysierten Polyestern hergestellten Folien versagten durchweg im Ofentest (s. Meßmethoden). Folien aus Germanium-katalysierten Polyestern waren noch schlechter als die Titan-katalysierten.

Versuche, das Verhalten im Ofentest durch Inaktivierung des Katalysators mit Phosphorstabilisatoren - wie in JP-A-2007/077220 beschrieben - zu verbessern, führten zwar zu einer verringerten Versprödung, aber noch nicht zu einem sicheren bestehen des Ofentests. Ebenso wenig konnte der Test durch Verringerung oder kompletten Verzicht auf den in der kommerziellen Folienherstellung üblichen Regenerateinsatz (Rückführung von Produktionsabfällen in die Folienherstellung) sicher bestanden werden. Dies führte lediglich zu einer graduellen Verbesserung der mechanischen Eigenschaften. Zudem führt eine solche Reduktion oder gar der Verzicht zu einer erheblichen Verschlechterung der Wirtschaftlichkeit der Folienproduktion. Auch eine Änderung des Umesterungskatalysators (untersucht wurden Zn, Mg und Mn) führte nicht zu Bratfolienbeuteln bzw. -schläuchen, die den Ofentest sicher bestanden.

EP-A-2 164 079 beschreibt eine Elektroisolierfolie aus einem Polyester, der zumindest teilweise mittels Titan-Katalysator hergestellt wurde, wobei die Folie ein Gemisch aus Radikalfängern enthält, um eine höhere thermische Stabilität zu erzielen. Der hohe Gehalt an freiem Stabilisator und die Auswahlmöglichkeiten der Stabilisatoren, ermöglichen aber Folien, die für die Anwendung im direkten Lebensmittelkontakt ungeeignet sind (z.B. durch Überschreiten von Migrationsgrenzwerten).

In EP-A-1 942 002 wird eine antimonfreie siegel- bzw. peelfähige Polyesterfolie beschrieben. Es wird erwähnt, dass Copolyester aufgrund ihrer - im Vergleich zu Homopolyester - geringeren Kristallinität eine höheren Antimon-Migrationsgeschwindigkeit aufweisen und dass deshalb Copolyester, wie sie üblicherweise in Siegelschichten eingesetzt werden, schon bei normalen Temperaturen als kritisch für den Lebensmittelkontakt zu bewerten sind, wenn Sie Antimon enthalten.

Die in EP-A-1 942 002 beschriebenen Folien zeigten nach ihrer Siegelung auf eine tiefgezogene Polyesterfolie (wie in WO2007054698 beschrieben) bereits nach ca. 60 Minuten bei 180 °C deutliche Versprödungen im Bereich der Siegelnaht. Diese Versprödungen führten zu Einrissen im Bereich der Siegelnaht mit Austritt von Flüssigkeit aus dem im Beutel gegartem Lebensmittel.

Dieselbe Beobachtung wurde auch bei der Verwendung von Siegelschichten, wie sie in DE102008046780 und DE102005058910 beschrieben sind, gemacht, wenn die Copolyester unter Verzicht auf Antimonkatalysatoren (es wurden Titan-basierte Katalysatoren verwendet) hergestellt wurden. Copolyesterfolien auf Antimonkatalysatorbasis im Gegensatz dazu verspröden unter diesen Bedingungen nicht. Ebenso wenig wie Titankatalysator-basierte Polyethylenterephthalatfolien mit einem Copolyesteranteil von < 5 Mol-%.

Das Versagen der Siegelnaht wurde noch deutlicher, wenn auch die thermoformbare Polyesterfolie des tiefgezogenen Beutels (Trays) aus einem Polyester (wie in WO-A-2007/054698 beschrieben) hergestellt wurde, bei dessen Herstellung der Antimonkatalysator durch einen Titankatalysator ersetzt wurde. In diesem Fall versagte nicht nur die Siegelnaht, sondern - insbesondere bei Temperaturen um 190 °C - der ganze Beutel. D.h. es kam zu Einrissen in der Siegelnaht und im Beutel selbst unter Austritt größerer Teile des darin gegarten Gutes.

Die gleichen Probleme, wie sie oben für Bratbeutel bzw. Fertiggericht-Trays beschrieben sind treten auch bei Copolyesterfolien für die Metalllaminierung auf. Die Siegelung von Copolyesterfolien, wie sie beispielsweise in DE-A-102008046780 und DE-A-102005058910 oder EP-A-1 942 002 oder WO-A-2007/054698 beschrieben sind, gegen Metalle wie Stahl oder Aluminium führt bei der anschließenden Herstellung von Containern (Dosen) zum Auftreten von Mikrorissen, wenn Titanverbindungen anstelle von Antimonverbindungen als Katalysatoren in der Polyesterherstellung verwendet werden. Solche Mikrorisse weisen die Polyesterfolien auf der Metalloberfläche insbesondere dann auf, wenn höhere Siegeltemperaturen verwendet wurden, oder heiße Lebensmittel in den Container eingefüllt wurden, oder darin sterilisiert werden.

Die EP 2 602 283 A2 schlägt vor, Polyesterfolien für Folienbeutel und Folienschläuche zu verwenden, die aus Polyestern aufgebaut sind, die zu mindestens 85 Mol-% aus Ethylenglykol und Terephthalsäure aufgebaut sind, wobei die restlichen Monomereinheiten aus anderen aliphatischen, cycloaliphatischen oder aromatischen Diolen bzw. Dicarbonsäuren stammen. Geeignete andere aliphatische Diole sind beispielsweise Diethylenglykol, Triethylenglykol, aliphatische Glykole der allgemeinen Formel $HO-(CH_2)_n-OH$, wobei n bevorzugt kleiner 10 ist.

Außer der oben genannten guten thermisch-mechanischen Stabilität und der Einhaltung von Migrationswerten ist für eine Folienverpackung in der ein Lebensmittel gegart werden soll auch eine hohe gleich bleibende Transparenz und neutrale Farbe von ausschlaggebender Bedeutung. So wird dem Anwender eine gute Sicht auf das Bratgut ermöglicht und eine geringe Eintrübung und Vergilbung beim Braten vermittelt optische eine gute Qualität. Die Konstanz der zuvor angesprochenen mechanischen Eigenschaften ermöglicht dann ein sicheres Handling des Beutels vor und nach dem Braten.

Aufgabe der vorliegenden Erfindung war es eine Polyesterfolie zu finden, die sich für den direkten Kontakt mit Lebensmitteln eignet und selbst bei längerer Temperaturbelastung ihre mechanische Stabilität, Farbe und gegebenenfalls Transparenz behält und dabei niedrige Antimon Migrationswerte aufweist.

Gelöst wird diese Aufgabe durch eine ein- oder mehrschichtige, weniger als 30 ppm Antimon und Germanium enthaltende, biaxial orientierte Polyesterfolie, wie in den Ansprüchen definiert.

Eine solche Folie weist eine hohe Temperaturresistenz auf, so dass aus ihr hergestellte Verpackungen (z.B. Bratbeutel) oder Metalllaminate mehr als eine Stunde in einem Ofen bei Temperaturen oberhalb von 180 °C verbleiben können, ohne zu verspröden oder Risse zu zeigen.

Die erfindungsgemäß verwendbaren Folien sind entweder einschichtig oder mehrschichtig, wobei die mehrschichtigen Folien aus gleichen oder verschiedenen Schichten aufgebaut sind. Insbesondere umfassen die mehrschichtigen Folien mindestens eine copolyesterhaltige Schicht (Siegelschicht), die dieser Siegeleigenschaften verleiht. Auch die einschichtigen Folien enthalten einen Copolyester bzw. bestehen aus diesem, beispielsweise um die Folie thermoformbar zu machen.

Die genannten Folien eignen sich zur Herstellung eines Folienbeutels oder -schlauches, in dem sich in einem Ofen bei 180 - 210 °C ein Lebensmittel über 60 - 120 Minuten garen lässt, ohne dass der Beutel (mechanisch) versagt. Ebenso weisen die siegelfähigen Folien nach der Siegelung gegen Metalle und anschließender Fertigung eines Metallcontainers keine Mikrorisse auf und diese entstehen auch nicht, wenn ein Füllgut in diesen Containern bei 80 - 140 °C sterilisiert wird.

Eine antimonfreie (d.h. <30 ppm Sb) Polyesterfolie weist die o.g. Eigenschaften, d.h. eine Reißdehnung von > 5 % in jeder Folienrichtung nach einem Ofentest (s. Testmethoden) dann auf, wenn sie

1. biaxial orientiert ist,

2. eine Reißdehnung (vor dem Ofentest) von mehr als 50 % in jeder Folienrichtung (MD u. TD) aufweist
3. 6 bis 100 μm dick ist,
4. insgesamt zu mehr als 80 Gew.-% aus einem thermoplastischen Polyester besteht und
5. mindestens eine Schicht aufweist, die zu weniger als 95 Mol% aus einem Homopolyester besteht und in dieser Schicht mindestens 300 ppm (bezogen auf diese nicht aus Homopolyester bestehende Schicht) eines Radikalfängers enthält.

Die Gesamtfolie besteht zu mindestens 80 Gew.-% , bevorzugt zu mindestens 85 Gew.-% und idealerweise zu mindestens 95 Gew.-% aus einem thermoplastischen Polyester, der aus Ethylenglykol und Terephthalsäure (= Polyethylenterephthalat, PET) aufgebaut ist.

Die restlichen Gew.-% sind dabei ggf. andere, von Polyestern verschiedene Polymere, Radikalfänger, Additive, wie Zuschlagstoffe wie Partikel zur Optimierung der Wickelbarkeit etc.. In einer bevorzugten Ausführungsform sind andere, von Polyestern verschiedene Polymere in der Folie nicht enthalten.

Polyester im Allgemeinen bestehen aus einer oder mehreren Dicarbonsäurekomponente(n) und einer oder mehreren Diolkomponente(n). Wenn im Vorstehenden wie im Folgenden von bestimmten Diolen bzw. Dicarbonsäuren als Bestandteile oder (Co)Monomere von Polyestern bzw. Copolyestern die Rede ist, so sind immer die entsprechenden, durch Wasserabspaltung erhaltenen, Fragmente der entsprechenden Diole bzw. Dicarbonsäuren gemeint, aus denen der Polyester durch Aneinanderreihung von alternierenden Dicarbonsäurefragmenten und Diolfragmenten gebildet wird.

Die Grundpolyester können demnach Homopolyester (aus einem (1) Dicarbonsäurefragment und einem (1) Diolfragment) oder Copolyester (aus zwei oder mehreren verschiedenen (>1) Dicarbonsäurefragmenten und/oder zwei oder mehreren verschiedenen (>1) Diolfragmenten) sein.

Der Erfindung lag die Erkenntnis zugrunde, dass Polyesterfolien, die siegelfähig und/oder metalllaminierbar und sterilisierbar sein sollen, also unter Temperaturbelastung mechanisch stabil bleiben sollen, keine reinen Homopolyesterfolien sein dürfen; ansonsten wären sie nicht siegelbar oder thermoformbar. Weisen sie aber einen wirksamen Copolyesteranteil auf, sind sie nicht mehr mechanisch temperaturstabil. Um dennoch beide Eigenschaften (siegelfähig/thermoformbar und mechanisch temperaturstabil) zu realisieren, muss der copolyesterhaltigen Folie ein Radikalfänger zugegeben werden. Daraus ergibt sich, dass für den Fall, dass der Grundpolyester der Folie ein Homopolyester ist, diesem ein Copolyester und ein Radikalfänger beigemischt werden muss bzw. wenn es sich beispielsweise um eine Mehrschichtfolie handelt, eine Außenschicht dieser Mehrschichtfolie mit einem Copolyester und mit einem Radikalfänger ausgerüstet wird. Ist andererseits der Grundpolyester bereits aus einem Copolyester, so braucht der Folie lediglich ein Radikalfänger zugegeben werden.

Die erfindungsgemäßen Folien weisen also mindestens eine außen liegende Schicht auf (bei einer Monofolie ist dies dieselbe; im Falle einer mehrschichtige Folie ist diese Schicht eine Außenschicht), die zu weniger als 95 Mol-%, bevorzugt zu weniger als 90 Mol-% und idealerweise zu weniger als 88 Mol-% aus PET besteht. Die restlichen Molprozente sind Copolyester, die aus Monomereinheiten aufgebaut sind, wobei die Dicarbonsäurekomponente oder die Diolkomponente oder beide Komponenten sich von den der/den entsprechenden Komponenten des Homopolyesters unterscheiden. Diese sich unterscheidenden Dicarbonsäurekomponenten und/oder Diolkomponenten stammen aus aliphatischen, cycloaliphatischen oder aromatischen Diolen bzw. Dicarbonsäuren. Geeignete Monomerzusammensetzugen sowohl für die thermoformbare Folien, als auch für die gegebenenfalls vorhandenen Siegelschichten sind z.B. in DE-A-102008046780 und DE-A-102005058910 oder EP-A-1 942 002 oder WO-A-2007/054698 beschrieben. Erfindungsgemäße Schichten enthalten Isophthalsäure als Comonomer. Die erfindungsgemäße Folie besteht mindestens zu 50 Mol-% aus Polyethylenterephthalat, da dies sowohl aus wirtschaftlichen, als auch aus Gründen der thermischen Stabilität die beste Lösung darstellt.

Die eingesetzten Polyester werden unter Verwendung einer geeigneten Titan oder Aluminiumverbindung als Polykondensationskatalysator hergestellt, wobei Titanverbindungen bevorzugt sind. Antimonverbindungen sind als Polymerisationskatalysator unerwünscht und der Gehalt an Antimon liegt unterhalb von 30 ppm, bevorzugt unterhalb von 2 ppm und idealerweise enthält die Folie gar kein Antimon. Das gleiche gilt für ebenfalls unerwünschte Germaniumverbindungen.

Die gesamte Folie enthält 50 - 10000 ppm eines Radikalfängers, wobei der Gehalt bevorzugt bis 5000 ppm und insbesondere bis 1200 ppm liegt. Niedrigere Gehalte als 50 ppm führen tendenziell zu einem Versagen im Ofentest und höhere als 10000 ppm haben keine weitere verbessernde Wirkung auf die Folie und verringern daher nur die Wirtschaftlichkeit und können zu einer Migration des Stabilisators aus der Folie in ein verpacktes Lebensmittel führen. Gehalte oberhalb von 1200 ppm führen zudem tendenziell zur Bildung von Gelen mit hohem Stabilisatorgehalt und einem Gelbstich.

In der/den copolyesterhaltigen Schicht/en der Folie liegt der Anteil an Radikalfänger bei mindestens 300 ppm, bevorzugt bei mindestens 500 ppm und idealerweise bei mindestens 800 ppm. Unterhalb von 300 ppm wird der Ofentest nicht bestanden. Bei Werten ab 800 ppm können die Zeiten im Ofentest auch über 90 Minuten liegen, bzw. sogar Temperaturen von 200 °C eingestellt werden. Die Konzentration an Radikalfänger liegt in der/den copolyesterhaltigen

Schichten bevorzugt bei weniger als 4000 ppm, besonders bevorzugt bei weniger als 2500 ppm und idealerweise bei weniger als 1200 ppm, da die Migration an Stabilisator aus copolyesterhaltigen Schichten schneller erfolgt als aus Homopolyesterschichten.

Als Radikalfänger kann sowohl bevorzugt eine Verbindung, oder weniger bevorzugt eine Mischung verschiedener Radikalfänger eingesetzt werden. Bei Mischungen müssen gegebenenfalls die Migrationswerte aller Verbindungen aus der Folie gemessen werden, was zu höheren kosten als bei der Verwendung eines einzelnen Stabilisators führt.

Der/die verwendete(n) Radikalfänger werden aus der Gruppe der phenolischen Antioxidantien, bzw. aus der Gruppe der Antioxidantien ausgewählt, die mindestens das Strukturelement

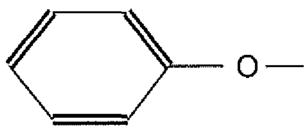

enthalten.

Die nachfolgenden Verbindungen weisen eine niedrige Toxizität und gute Eigenschaften als Radikalfänger auf und sind daher bevorzugte Radikalfänger im Sinne der Erfindung: 5,7-Di-tert-butyl-3-(3,4- und 2,3-Dimethylphenyl)-3H-benzofuran-2-on (enthaltend a) 5,7-Di-tert-butyl-3-(3,4-dimethylphenyl)-3H-benzofuran-2-on (80 bis 100 Gew.-%) und b) 5,7-Di-tert-butyl-3-(2,3-dimethylphenyl)-3H-benzofuran-2-on (0 bis 20 Gew.-%), CAS-Nr. 88-24-4 = 2,2' -Methylen bis(4-ethyl-6-tert-butylphenol), CAS-Nr. 96-69-5 = 4,4' -Thiobis-(6-tert-butyl-3-methylphenol), CAS-Nr. 119-47-1 = 2,2' -Methylen- bis(4-methyl-6-tert-butylphenol), CAS-Nr. 128-37-0 = 2,6-di-tert-butyl-p-cresol, CAS-Nr. 991-84-4 = 2,4-Bis-(octylmercapto)-6-(4-hydroxy-3,5-di-tert-butylanilino)-1,3,5-triazin, CAS-Nr. 1709-70-2 = 1,3,5-Trimethyl-2,4,6-tris(3,5-di-tert-butyl-4-hydroxybenzyl)-benzol, CAS-Nr. 1843-03-4 = 1,1,3-tris(2-methyl-4-hydroxy-5-tert-butylphenyl) butane, CAS-Nr. 2082-79-6 = octadecyl 3-(3,5-di-tert-butyl-4-hydroxyphenyl)propionate, CAS-Nr. 3135-18-0 = 3,5-di-tert-butyl-4-hydroxybenzylphosphonic acid, dioctadecyl ester, CAS-Nr. 4130-42-1 = 2,6-di-tert-butyl-4-ethylphenol, CAS-Nr. 6683-19-8 = pentaerythritol tetrakis[3-(3,5-di-tert-butyl-4-hydroxyphenyl)-propionate), CAS-Nr. 23128-74-7 = 1,6-hexamethylene-bis(3-(3,5-di-tert-butyl-4-hydroxyphenyl) propionamide), CAS-Nr. 25013-16-5 = tert-Butyl 4-hydroxyanisol, CAS-Nr. 27676-62-6 = 1,3,5-Tris(3,5-di-tert-butyl-4-hydroxybenzyl)-1,3,5-triazin-2,4,6(1H,3H,5H)-trion, CAS-Nr. 32509-66-3 = Ethylenglykolbis[3,3-bis(3-tert-butyl-4-hydroxyphenyl)butyrat], CAS-Nr. 32687-78-8 = N,N' -Bis(3-(3,5-di-tert-butyl-4-hydroxyphenyl)propionyl)hydrazid, CAS-Nr. 35074-77-2 = 1,6-Hexamethylen-bis(3-(3,5-di-tert-butyl-4-hydroxyphenyl)propionat), CAS-Nr. 35958-30-6 = 1,1-Bis(2-hydroxy-3,5-di-tert-butylphenyl)ethan, CAS-Nr. 36443-68-2 = Triethyleneglycol-bis[3-(3-tert-butyl-4-hydroxy-5-methylphenyl)propionat], CAS-Nr. 36443-68-2 = Triethy-leneglykol-bis[3-(3-tert-butyl-4-hydroxy-5-methylphenyl)propionat], CAS-Nr. 40601-76-1 = Thiodiethanol-bis(3-(3,5-di-tert-butyl-4-hydroxyphenyl)propionat), CAS-Nr. 57569-40-1 = Terephthalsäure, Diester mit 2,2' -Methylenbis(4-methyl-6-tert- butylphenol), CAS-Nr. 61167-58-6 = Acrylsäure, 2-tert-Butyl-6-(3-tert-butyl-2-hydroxy-5- methylbenzyl)-4-methyl-phenylester, CAS-Nr. 65140-91-2 = 3,5-Di-tert-butyl-4-hydroxybenzylphosphon-säure-monoethylester, Calciumsalz, CAS-Nr. 70331-94-1 = 2,2' -Oxamidobis[ethyl-3-(3,5-di-tert-butyl-4-hydroxyphenyl)-propionat], CAS-Nr. 110553-27-0 = 2,4-bis(octylthiomethyl)-6-methylphenol, CAS-Nr. 110675-26-8 = 2,4-bis(dodecylthiomethyl)- 6-methylphenol.

Radikalfänger mit dem erfindungsgemäßen Strukturelement sollten ein Molekulargewicht oberhalb von 300 g/Mol und besonders bevorzugt von oberhalb 500 g/Mol aufweisen und idealerweise oberhalb von 700 g/Mol aufweisen, da Verbindungen mit niedrigeren Molekulargewichten unter den für Polyester typischen Verarbeitungstemperaturen eine zu hohe Flüchtigkeit aufweisen und so bei der Folienherstellung teilweise abdampfen. Dies kann zu Problemen bei der Herstellung führen (Dampfentwicklung, Geruch, Blasenbildung in der Folie etc) und hat zudem den Nachteil einer höheren Migrationstendenz bei der Verwendung als Bratbeutel oder -schlauch. Dies gilt u.a. für die in der obigen Liste genannten Verbindungen mit den CAS-Nummern: 2082-79-6, 25013-16-5, 128-37-0. Verbindungen mit einem Molekulargewicht unterhalb von 300 g/Mol werden daher bevorzugt zu weniger als 500 ppm und besonders bevorzugt zu weniger als 300 ppm und idealerweise gar nicht eingesetzt. Verbindungen mit einem Molekulargewicht unterhalb von 500 g/Mol werden daher bevorzugt zu weniger als 1000 ppm und besonders bevorzugt zu weniger als 500 ppm und idealerweise gar nicht eingesetzt.

Verbindungen aus der obigen Liste, die Stickstoff enthalten führten bei der Verwendung zu Folien mit höheren Gelbwerten. Dies ist unerwünscht; daher werden Radikalfänger mit Stickstoff in der Summenformel bevorzugt zu weniger als 1000 ppm, besonders bevorzugt zu weniger als 500 ppm und idealerweise gar nicht eingesetzt.

Radikalfänger mit Schwefel in der Summenformel wiesen bei der Herstellung der Folie einen charakteristischen als eher unangenehm empfundenen Geruch auf und sind daher weniger bevorzugt. Radikalfänger mit Schwefel in der Summenformel werden bevorzugt zu weniger als 500 ppm, besonders bevorzugt zu weniger als 300 ppm und idealerweise gar nicht eingesetzt.

Besonders gute Eigenschaften hinsichtlich Thermostabilität, geringer Migration aus der Folie und Gelbfärbung

wiesen die Verbindungen mit den CAS-Nr. 1709-70-2, 3135-18-0, 6683-19-8 und 57569-40-1 auf. Diese sind bevorzugte Radikalfänger im Sinne der Erfindung. Besonders bevorzugt sind dabei aus den genannten Gründen die Verbindungen mit den CAS-Nr. 1709-70-2 und 6683-19-8.

Der/die Radikalfänger können dem Polyester sowohl direkt bei der Polymerherstellung, als auch später durch Einarbeiten der Verbindungen in einen fertigen Polyester zugegeben werden. Bei der Einarbeitung in einen fertigen Polyester hat sich CAS-Nr. 1709-70-2 (Irganox 1330) als besonders geeignet erwiesen, da hierbei keine Blasenbildung oder Dampfentwicklung beobachtet wurde.

Die Folie weist eine Dicke von 6 bis 100 µm auf. Bei weniger als 6 µm ist ein Handling der Folie durch den Endanwender nicht mehr sicher möglich und es kann insbesondere leichter zu einem Einreißen der Folie bei der Verwendung kommen. Zudem weisen diese Folien ein ungünstiges Oberfläche-zu-Polymermenge-Verhältnis auf, was zu einer schnelleren Versprödung im Ofentest führt. Daher müssen dünnere Folien deutlich mehr Radikalfänger enthalten als dickere und es kann dann zu einer unerwünschten größeren Migration des Radikalfängers aus der Folie kommen. Folien mit einer Dicke von oberhalb von 100 µm weisen keinen weiteren Vorteil hinsichtlich der Stabilität auf und verringern nur die Wirtschaftlichkeit der daraus hergestellten Bratbeutel oder -schläuche, Deckelfolien oder Metalllaminierfolien. Idealerweise liegt die Foliendicke daher zwischen 8 und 36 µm.

Alle Schichten können unabhängig voneinander übliche Additive, wie bspw. Antiblockmittel oder Weißpigmente enthalten. Sie werden in üblicher Weise dem Polymer bzw. der Polymermischung bereits vor dem Aufschmelzen zugesetzt. Bevorzugt werden diese Additive in den Deckschichten (=Außenschichten) eingesetzt.

Typische Antiblockmittel sind anorganische und/oder organische Partikel, beispielsweise kristalline oder amorphe Kieselsäure, Talk, Magnesiumcarbonat, Bariumcarbonat, Calciumsulfat, Lithiumphosphat, Calciumphosphat, Magnesiumphosphat, Aluminiumoxid, Aluminiumsilikate, Lithiumfluorid, Calcium-, Barium-, Zink- oder Mangan-Salze der eingesetzten Dicarbonsäuren, Titandioxid, Kaolin oder vernetzte Polystyrol-, PMMA- oder Acrylatpartikel.

Üblicherweise liegt der Anteil an Antiblockmittel oder anderen Pigmenten in transparenten Folien in keiner Schicht bei mehr als 6 Gew.-%, idealerweise in keiner Schicht bei mehr als 3 Gew.-%. Üblicherweise liegt der Anteil an Antiblockmittel oder anderen Pigmenten in der Gesamtfolie bei < 1,5 Gew.-%, bevorzugt bei < 1 Gew.-% und idealerweise bei < 0,5 Gew.-%

In einer bevorzugten transparenten Ausführungsform weist die Folie eine Trübung von weniger als 10 % auf. Bevorzugt liegt die Trübung bei kleiner 5 % und idealerweise bei kleiner 3 %. Die Helligkeit der Folie L* liegt in dieser bevorzugten Ausführungsform bei größer 85, bevorzugt bei größer 90 und idealerweise bei größer 93,5. Der Gelbwert b* der Folie liegt in dieser bevorzugten Ausführungsform bei kleiner 2,5, bevorzugt bei kleiner 2 und idealerweise bei kleiner 1,5. Die Transparenz der Folien liegt in einer bevorzugten Ausführungsform bei größer 80 %, bevorzugt größer 88 %, idealerweise größer 90 %.

Diese optischen Eigenschaften charakterisieren eine Folie mit einem ansprechenden Aussehen und ermöglichen beispielsweise eine gute, unverfälschte Durchsicht auf das Bratgut. Diese Eigenschaften werden erreicht, wenn die oben genannten Mengenangaben für Antiblockmittel und Radikalfänger eingehalten werden.

Die Folie ist ebenfalls charakterisiert durch eine Reißdehnung von mindestens 50 % in beiden Folienrichtungen. Bevorzugt liegt die Reißdehnung in beiden Folienrichtungen bei mindestens 60 % und idealerweise bei mindesten 75 %. Diese Eigenschaften werden durch die Einhaltung der erfindungsgemäßen Dickenbereiche, den unten beschriebenen Herstellprozess in Verbindung mit den oben beschriebenen Polyestern erreicht.

Nach dem Ofentest weist die erfindungsgemäße Folie eine Reißdehnung in jeder Folienrichtung von mehr als 5 %, bevorzugt von mehr als 10 % und idealerweise von mehr als 25 % auf.

Siegelfähige Folien weisen in einer bevorzugten Ausführungsform zudem nach einem speziellen Ofentest für siegelfähige Folien eine Siegelnahtfestigkeit von mindestens 25 %, bevorzugt on mindestens 30 % und idealerweise von mindestens 40 % der initialen Siegelnahtfestigkeit auf.

Insbesondere wenn die o.g. Radikalfänger in ausreichender Menge zugesetzt werden und ferner dann, wenn die besonders bevorzugten Stabilisatoren verwendet werden weist die erfindungsgemäße Folie nach dem Ofentest einen Anstieg des Gelbwertes b* von weniger als 6, bevorzugt von weniger als 3 und idealerweise von weniger als 1 auf. Dies indiziert dem Anwender eine hohe Folienqualität.

Die erfindungsgemäße Folie weist üblicherweise bei 150 °C einen Schrumpf in Längs- und Querrichtung von unter 10 %, bevorzugt unter 5 %, und besonders bevorzugt von unter 2 % auf. Hierdurch wird eine unerwünschte Verkleinerung des Beutels oder Schlauchs beim Braten vermieden. Die Schrumpfeigenschaften werden durch das unten beschriebene Herstellverfahren erreicht.

In einer weiteren bevorzugten Ausführungsform ist die Folie mindestens einseitig mit einer Haftvermittlung für Druckfarben beschichtet. Als Beschichtungen eignen sich beispielsweise Acrylate oder Copolyester mit Sulfoisophthalsäuregehalten von > 0,2 Gew.-%.

In einer bevorzugten Ausführungsform weist die Folie auf jeder Oberfläche einen Ra-Wert von mindestens 30 nm, besser von mindestens 40 nm und idealerweise von mindestens 45 nm auf. Der Ra-Wert liegt bevorzugt auf keiner Oberfläche bei mehr als 200 nm, besser auf keiner Oberfläche bei mehr als 110 nm und idealerweise bei unter 100 nm.

Zu niedrige Ra-Werte können zu einem statischen Zusammenkleben des Beutels oder Schlauchs führen, was es dem Endverbraucher erschwert diesen zu öffnen. Zu hohe Ra-Werte können zu einer unerwünschten Trübung der Folie führen. Dieser Ra-Wert wird durch Zugabe von Partikeln in die Folie, bzw. bei mehrschichtigen Folien bevorzugt durch Zugabe von Partikeln in die Deckschichten erreicht. Bevorzugt liegt dabei der d50-Wert dieser Partikel (oder deren Agglomerate) bei > 0,3 µm und besonders bevorzugt bei > 0,5 µm und idealerweise bei > 0,8 µm. Liegt der d50-Wert unterhalb von 0,3 µm müssen zu viele Partikel zugegeben werden. Bevorzugt liegt der d50-Wert der Partikel unter 7 µm, besonders bevorzugt unter 5 µm und idealerweise unter 4 µm. Je größer die Partikel sind, desto geringer ist in der Regel die Reißdehnung der Folie.

Verfahren zur Folienherstellung

Die Polyester-Matrixpolymere der einzelnen Schichten werden durch Polykondensation hergestellt, entweder ausgehend von Dicarbonsäuren und Diol (sog. "PTA-Verfahren") oder auch ausgehend von den Estern der Dicarbonsäuren, vorzugweise die Dimethylester und Diol (sog. "DMT-Verfahren"). Verwendbare Polyethylenterephthalate haben bevorzugt SV-Werte im Bereich von 700 bis 1000. Liegen diese darunter leidet die Laufsicherheit und bei höheren SV Werten kommen die Extruder an ihre Leistungsgrenzen.

Zunächst wird das Polymere bzw. die Polymermischung der einzelnen Schichten in einem Extruder komprimiert und verflüssigt. Dann werden die Schmelzen durch eine Breitschlitzdüse gepresst und auf einer Kühlwalze und einer oder mehreren Abzugswalzen abgezogen, wobei die Folie abkühlt und sich verfestigt. Es hat sich als günstig erwiesen, wenn die Extrusionstemperaturen der copolyesterhaltigen Schicht/Schichten 280° nicht überschreiten. Bevorzugt werden diese Schichten bei weniger als 275 °C aufgeschmolzen und extrudiert.

Die erfindungsgemäße Folie wird biaxial orientiert, d.h. biaxial gestreckt. Die biaxiale Verstreckung der Folie wird am häufigsten sequenziell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man im Allgemeinen einen entsprechenden Kluppenrahmen. Statt der sequentiellen Streckung ist auch eine simultane Streckung der Folie möglich, aber nicht notwendig.

Die Temperatur, bei der die Streckung durchgeführt wird, kann in einem relativ großen Bereich variieren. Im Allgemeinen wird die Streckung in Längsrichtung in einem Temperaturbereich von 80 bis 130°C (Aufheiztemperaturen 80 bis 130°C) und in Querrichtung in einem Temperaturbereich von 90°C (Beginn der Streckung) bis 140°C (Ende der Streckung) durchgeführt. Das Längsstreckverhältnis liegt im Bereich von 2,5:1 bis 5,5:1, bevorzugt von 3:1 bis 4,5:1, insbesondere zwischen 3,2 und 4. Das Querstreckverhältnis liegt allgemein im Bereich von 2,8:1 bis 5,5:1, bevorzugt von 3:1 bis 4,7:1 und insbesondere zwischen 3,2 und 4,5.

Vor der Querstreckung können eine oder beide Oberfläche(n) der Folie nach den an sich bekannten Verfahren In-Line beschichtet werden. Die In-Line-Beschichtung kann beispielsweise zu einer verbesserten Haftung zwischen einer Druckfarbe und der Folie, zu einer Verbesserung des antistatischen Verhaltens oder des Verarbeitungsverhaltens der Folie führen. Wenn die äußeren koextrudierten Schichten keine Partikel zur Verbesserung der Schlupf- und Wickelcharakteristik enthalten, kann an dieser Stelle eine partikelhaltige Beschichtung aufgebracht werden.

Bei der nachfolgenden Thermofixierung wird die Folie über eine Zeitdauer von etwa 0,1 bis 10s unter Spannung bei einer Temperatur von 150 bis 250°C gehalten und zum Erreichen der bevorzugten Schrumpf- und Längungswerte um mindestens 1, bevorzugt mindestens 3 und besonders bevorzugt mindestens 4 % in Querrichtung relaxiert. Diese Relaxation findet bevorzugt in einem Temperaturbereich von 150 ° bis 190 °C statt. Bevorzugt finden <25% aber >5% der Gesamtrelaxation innerhalb der ersten 25% der Relaxationszeit. Anschließend wird die Folie in üblicher Weise aufgewickelt.

Bei der Herstellung der Folie ist gewährgeleistet, dass das Regenerat in einer Konzentration von 0 bis 80 Gew.-%, bezogen auf das Gesamtgewicht der Folie, wieder der Extrusion zugeführt werden kann, ohne dass dabei die physikalischen und optischen Eigenschaften der Folie nennenswert negativ beeinflusst werden. D.h. es tritt keine Gelbfärbung oder ein Versagen im Ofentest ein

Aus der erfindungsgemäßen Folie wird in einer bevorzugten Anwendung anschließend per Verklebung oder bevorzugt durch Verschweißen oder durch Tiefziehen ein Folienbeutel oder -schlauch beliebiger Größe hergestellt.

Die Verwendung der erfindungsgemäßen Folie führt zu einem Bratbeutel oder -schlauch, der kein bzw. extrem wenig Antimon enthält, im Ofen nicht versprödet und sowohl optisch als auch in der Handhabung gute Eigenschaften aufweist. Neben der Verwendung als Beutel eignen sich siegelfähige Varianten der erfindungsgemäßen Folie hervorragend als aufgesiegelte Deckelfolie für die vorher erwähnten Beutel.

Eine weitere bevorzugte Verwendung ist die Siegelung einer solchen Folie auf Aluminium oder Stahl, wobei aus dem laminierten Stahl eine Dose hergestellt wird.

Zur Charakterisierung der Rohstoffe und der Folien wurden die folgenden Messwerte bzw. Messverfahren

benutzt:

**Rauigkeit**

Die Rauigkeit $R_a$ der Folie wird nach DIN 4768 bestimmt.

**Transparenz**

Die Transparenz wird nach ASTM-D 1003-61 Methode A bestimmt mittels haze-gard plus der Firma BYK-Gardner GmbH, Deutschland.

**Mechanische Eigenschaften**

Der E-Modul, die Reißfestigkeit, Reißdehnung und der $F_5$-Wert werden in Längs- und Querrichtung nach ISO 527 - 1 und 527 - 3 mit Hilfe eines Zug-Dehnungsmesser (Typ 010 der Fa. Zwick/DE) gemessen.

**Standardviskosität (SV)**

Die Standardviskosität SV wird - angelehnt an DIN 53726 - durch die Messung der relativen Viskosität $\eta_{rel.}$ einer 1 Gew.-%igen Lösung des Polyesterrohstoffs bzw. der Folie in Dichloressigsäure (DCE) in einem Ubbelohde Viskosimeter bei 25 °C gemessen. Aus der relativen Viskosität $\eta_{rel.}$ wird der dimensionslose SV-Wert wie folgt ermittelt:

$$SV = (\eta_{rel.} - 1) \bullet 1000$$

**Schrumpf**

Der thermische Schrumpf wird an quadratischen Folienmustern mit einer Kantenlänge von 10 cm bestimmt. Die Proben werden so ausgeschnitten, dass eine Kante parallel zur Maschinenrichtung und eine Kante senkrecht zur Maschinenrichtung verläuft. Die Proben werden genau ausgemessen (die Kantenlänge $L_0$ wird für jede Maschinenrichtung TD und MD bestimmt, $L_{0\ TD}$ und $L_{0\ MD}$) und werden 15 min bei der angegeben Schrumpfungstemperatur (hier 150 °C) in einem Umlufttrockenschrank getempert. Die Proben werden entnommen und bei Raumtemperatur genau ausgemessen (Kantenlänge $L_{TD}$ und $L_{MD}$). Der Schrumpf ergibt sich aus der Gleichung:

$$\text{Schrumpf [\%] MD} = 100 \bullet (L_{0\ MD} - L_{MD}) / L_{0\ MD}$$

$$\text{Schrumpf [\%] TD} = 100 \bullet (L_{0\ TD} - L_{TD}) / L_{0\ TD}$$

**Trübung**

Bestimmt nach ASTM-D 1003-61 (Methode A) mittels haze-gard plus der Firma BYK- -Gardner GmbH, Deutschland.

**Farbkennzahlen (CIE), a*, b*, L***

Diese Werte werden am Spektralphotometer der Firma BYK Deutschland bestimmt.

Gerät: color-sphere
Die Bezeichnung des Messprogrammes lautet: auto-QC.

**Ofentest allgemein**

Ein Folienstück wird in einen Umluftofen eingebracht, der auf 180 °C vorgeheizt wurde. Die Folie wird dabei auf ein Drahtnetz (Maschenweite 0,25 - 2 cm) gelegt. Die Folie verbleibt für 90 Minuten bei 180 °C im Ofen. Anschließend werden die mechanischen Eigenschaften, der Schrumpf, die Farbkennzahlen und der SV (=SV-Wert der Folie nach Ofentest) wie beschrieben bestimmt.

**Spezieller Ofentest für siegelfähige Folien**

Zur Bestimmung der Siegelnahtfestigkeit nach Ofentest wird ein Folienstreifen (100 mm lang . 15 mm breit) auf einen zweiten Folienstreifen gelegt, so dass Siegelschicht auf Siegelschicht liegt und bei der eingestellten Temperatur von 180 °C, einer Siegelzeit von 1,0 s und einem Siegeldruck von 3 bar (Siegelgerät HSG/ET der Firma Brugger (München, DE), einseitig beheizte Siegelbacke) gesiegelt. Die gesiegelten Streifen werden nach Abkühlung auf Raumtemperatur unter einem Winkel von 180° auseinandergezogen und die benötigte Kraft mit einer Abzugsgeschwindigkeit von 200 mm/min bestimmt. Die Siegelnahtfestigkeit wird in N pro 15 mm Folienstreifen angegeben (z. B. 3 N/15 mm).

Zwei weitere Folienstücke werden wie oben beschrieben gesiegelt. Das Folienstück wird anschließend in einen Umluftofen eingebracht, der auf 180 °C vorgeheizt wurde. Die Folie wird dabei auf ein Drahtnetz (Maschenweite 0,25 - 2 cm) gelegt. Die Folie verbleibt für 90 Minuten bei 180 °C im Ofen. Die gesiegelten Streifen werden nach Abkühlung auf Raumtemperatur unter einem Winkel von 180° auseinandergezogen und die benötigte Kraft mit einer Abzugsgeschwindigkeit von 200 mm/min bestimmt. Die Siegelnahtfestigkeit wird in N pro 15 mm Folienstreifen angegeben (z. B. 3 N/15 mm). Die Siegelnahfestigkeit nach dem Aufenthalt im Ofen muss mindestens 25 % der initialen Siegelnahtfestigkeit vor Ofentest betragen, damit der Test als bestanden gilt.

**Beispiele**

In den Beispielen kommen die folgenden Rohstoffe zu Einsatz:

PET1 = Polyethylentererphthalatrohstoff aus Ethylenglykol und Terephthalsäure mit einem SV Wert von 820 und DEG-Gehalt von 0,9 Gew.% (Diethylenglykolgehalt als Monomer). Hergestellt mittels PTA Verfahren. Katalysator Antimontrioxid. Antimongehalt 250 ppm. Umesterungskatalysator Zinkacetat.

PET2 = Polyethylentererphthalatrohstoff aus Ethylenglykol und Terephthalsäure mit einem SV Wert von 825 und DEG-Gehalt von 0,9 Gew.% (Diethylenglykolgehalt als Monomer). Hergestellt mittels PTA Verfahren. Katalysator Kaliumtitanyloxalat mit 18 ppm Titan. Antimongehalt 0 ppm. Umesterungskatalysator Zinkacetat.

PET3 = Polyethylentererphthalatrohstoff aus Ethylenglykol und Dimethylterephthalat mit einem SV Wert von 800 und DEG-Gehalt von 1 Gew.% (Diethylenglykolgehalt als Monomer) und 1,0 Gew.% Siliziumdioxid-Pigment Sylobloc 44H mit einem d50 von 2,5 μm. Hergestellt mittels DMT Verfahren. Katalysator Kaliumtitanyloxalat mit 18 ppm Titan. Antimongehalt 0 ppm. Umesterungskatalysator Zinkacetat.

PET4 = 5000 ppm Irganox 1010 CAS-Nr. 6683-19-8 (Hersteller BASF, Schweiz) in Rezeptur von PET2. Die Zugabe des Irganox 1010 erfolgte zu Beginn der Polykondensation. SV-Wert 800. Antimongehalt 0 ppm

PET5 = 5000 ppm Irganox 1098 CAS-Nr. 23128-74-7 (Hersteller BASF, Schweiz) eingearbeitet mittels eines Zweischneckenextruders in PET2. SV-Wert 695. Antimongehalt 0 ppm

PET6 = Polyethylentererphthalatrohstoff aus Ethylenglykol und Dimethylterephthalat mit einem SV Wert von 820 und DEG-Gehalt von 0,9 Gew.% (Diethylenglykolgehalt als Monomer) und 1,0 Gew.% Siliziumdioxid-Pigment Sylobloc 44H mit einem d50 von 2,5 μm. Hergestellt mittels DMT Verfahren. Katalysator Antimontrioxid. Antimongehalt 250 ppm. Umesterungskatalysator Zinkacetat.

PET 7 = Polyethylentererphthalatrohstoff aus Ethylenglykol und Terephthalsäure und Isophthalsäure, wobei der Anteil an Isophthalsäure im Polymer bei 23 Gew. % liegt mit einem SV Wert von 810 und DEG-Gehalt von 0,9 Gew.% (Diethylenglykolgehalt als Monomer). Hergestellt mittels PTA Verfahren. Katalysator Antimontrioxid. Antimongehalt 250 ppm. Umesterungskatalysator Zinkacetat.

PET8 = Polyethylentererphthalatrohstoff aus Ethylenglykol und Terephthalsäure und Isophthalsäure, wobei der Anteil an Isophthalsäure im Polymer bei 23 Gew. % liegt mit einem SV Wert von 812 und DEG-Gehalt von 0,9 Gew.% (Diethylenglykolgehalt als Monomer). Hergestellt mittels PTA Verfahren. Katalysator Kaliumtitanyloxalat mit 18 ppm Titan. Antimongehalt 0 ppm. Umesterungskatalysator Zinkacetat.

PET 9 = Polyethylentererphthalatrohstoff aus Ethylenglykol und Terephthalsäure und Isophthalsäure, wobei der Anteil an Isophthalsäure im Polymer bei 18 Gew. % liegt mit einem SV Wert von 809 und DEG-Gehalt von 0,9 Gew.% (Diethylenglykolgehalt als Monomer). Hergestellt mittels PTA Verfahren. Katalysator Antimontrioxid. Antimongehalt 250 ppm. Umesterungskatalysator Zinkacetat.

PET 10 = Polyethylentererphthalatrohstoff aus Ethylenglykol und Terephthalsäure und Isophthalsäure, wobei der Anteil an Isophthalsäure im Polymer bei 18 Gew. % liegt mit einem SV Wert von 811 und DEG-Gehalt von 0,9 Gew.% (Diethylenglykolgehalt als Monomer). Hergestellt mittels PTA Verfahren. Katalysator Kaliumtitanyloxalat mit 18 ppm Titan. Antimongehalt 0 ppm. Umesterungskatalysator Zinkacetat.

PET11 = 5000 ppm Irganox 1010 CAS-Nr. 6683-19-8 (Hersteller BASF, Schweiz) in Rezeptur von PET8. Die Zugabe des Irganox 1010 erfolgte zu Beginn der Polykondensation. SV-Wert 802. Antimongehalt 0 ppm.

PET12 = 2000 ppm Irganox 1010 CAS-Nr. 6683-19-8 (Hersteller BASF Schweiz) in Rezeptur von PET10. Die Zugabe des Irganox 1010 erfolgte zu Beginn der Polykondensation. SV-Wert 810. Antimongehalt 0 ppm.

***Verfahren** für Beispiele*

**Beispiele 1 und 2 und Vergleichsbeispiele 1 - 2**

Die Polymer-Mischungen wurden in 3 Zweischnecken-Extrudern bei 285 °C aufgeschmolzen, wobei der Extruder durch den die Copolyester haltige Schicht extrudiert wurde auf 274 °C eingestellt wurde:
Die Polymermischungen wurden in einem Adapter zusammengeführt und durch eine Breitschlitzdüse auf eine auf 30 °C temperierte Kühlwalze elektrostatisch angelegt. Anschließend wurden sie bei folgenden Bedingungen längs- und dann quergestreckt:

| | | | |
|---|---|---|---|
| Längsstreckung | Aufheiztemperatur | 75-115 | °C |
| | Strecktemperatur | 115 | °C |
| | Längsstreckverhältnis | 3,5 | |
| Querstreckung | Aufheiztemperatur | 100 | °C |
| | Strecktemperatur | 110 | °C |
| | Querstreckverhältnis | 4,0 | |
| Fixierung | Temperatur | 237- 150 | °C |
| | Dauer | 2 | s |
| | Relaxation in TD bei 200 - 150 °C | 8 | % |

Die so erhaltene Folie hat eine Gesamtdicke von 12 μm und die Deckschichten A und C sind beide 1,2 μm dick.

| | Beispiel 1 | Beispiel 2 | Vergleichsbeispiel 1 | Verqleichsbeispiel 2 |
|---|---|---|---|---|
| Rohstoffe | | | | |
| A-Schicht | 10 Gew.% PET3 / 80 Gew% PET2 / 10 Gew.% PET4 | 10 Gew.% PET3 / 80 Gew% PET2 / 10 Gew.% PET5 | 10 Gew.% PET3 / 80 Gew% PET2 / 10 Gew.% PET4 | 5 Gew.% PET6 / 90 Gew% PET1 |
| B-Schicht | 90 Gew. % PET2 / 10 Gew.% PET4 | 90 Gew. % PET2 / 10 Gew.% PET5 | 90 Gew. % PET2 / 10 Gew.% PET4 | 100 Gew. % PET1 |
| C-Schicht (Siegelschicht) | 5 Gew.% PET3 / 95 Gew% PET11 | 5 Gew.% PET3 / 95 Gew% PET11 | 5 Gew.% PET3 / 95 Gew% PET8 | 5 Gew.% PET6 / 95 Gew% PET7 |
| Antimongehalt in ppm | 0 | 0 | 0 | 250 |

(fortgesetzt)

| | Beispiel 1 | Beispiel 2 | Vergleichsbeispiel 1 | Verqleichsbeispiel 2 |
|---|---|---|---|---|
| Folien SV | 790 | 781 | 787 | 788 |
| b* | 0,6 | 6 | 0,7 | 0,9 |
| b* nach Ofentest | 0,65 | 8 | 2 | 1,5 |
| SV nach Ofentest | 805 | 779 | 738 | 770 |
| Reißdehnung MD in % | 106 | 100 | 102 | 100 |
| Reißdehnung TD in % | 97 | 97 | 94 | 96 |
| Reißdehnung MD in % nach Ofentest | 90 | 88 | 41 | 91 |
| Reißdehnung TD in % nach Ofentest | 88 | 86 | 25 | 85 |
| Reißfestigkeit MD in $N/mm^2$ | 217 | 218 | 225 | 215 |
| Reißfestigkeit TD in $N/mm^2$ | 251 | 263 | 267 | 255 |
| Trübung in % | 1,5 | 1,5 | 1,8 | 1,6 |
| Transparenz in % | 91,6 | 91 | 91,3 | 91,6 |
| Trübung in % nach Ofentest | 1,7 | 1,9 | 2,2 | 2,4 |
| Schrumpf MD in % | 1,6 | 1,7 | 1,5 | 1,6 |
| Schrumpf TD in % | 0,2 | 0,2 | 0,1 | 0,2 |
| Helligkeit L* | 95,9 | 95 | 95,9 | 95,6 |
| Siegelnahtfestigkeit vor Ofentest in N/15mm | 6 | 5,9 | 6,1 | 5,9 |
| Siegelnahtfestigkeit nach Ofentest in N/15mm | 5,4 | 5,0 | 0,5 | 4,4 |
| Analyse der Folienoberfläche nach Aufsiegeln auf Stahl und Biegen des Stahls um 30° mittels Mikroskop | Keine Mikrorisse | Keine Mikrorisse | Viele Mikrorisse | Einzelne Mikrorisse |
| Beobachtungen | | Gelbfärbung deutlich erkennbar und für die meisten Anwendungen intolerabel | | Zu hohe Migration von Antimon aus der Folie nach dem Aufsiegeln auf einen Beutel und Garen eines Lebensmittels im Beutel |

Die Rauheit Ra aller Beispiele und Vergleichsbeispiele lag auf der A-Seite zwischen 41 und 51 nm

**Beispiel 3 und Vergleichsbeispiele 3 - 4**

Die Polymer-Mischungen wurden in einem Zweischnecken-Extruder bei 275 °C aufgeschmolzen:
Die Polymermischungen wurden durch eine Breitschlitzdüse auf eine auf 30 °C temperierte Kühlwalze elektrostatisch angelegt. Anschließend wurde sie bei folgenden Bedingungen längs- und dann quergestreckt:

| | | | |
|---|---|---|---|
| Längsstreckung | Aufheiztemperatur | 75-115 | °C |
| | Strecktemperatur | 115 | °C |
| | Längsstreckverhältnis | 3,5 | |
| Querstreckung | Aufheiztemperatur | 100 | °C |
| | Strecktemperatur | 110 | °C |
| | Querstreckverhältnis | 4,0 | |
| Fixierung | Temperatur | 237 - 150 | °C |
| | Dauer | 2 | s |
| | Relaxation in TD bei 200 - 150 °C | 8 | % |

Die so erhaltene Folie hat eine Gesamtdicke von 75 μm.

| | Beispiel 3 | Vergleichsbeispiel 3 | Vergleichsbeispiel 4 |
|---|---|---|---|
| Rohstoffe | | | |
| Rezeptur | 50 Gew.% PET12 / 1 Gew% PET3 /49 % PET2 | 50 Gew.% PET10 / 1 Gew% PET3 /49 % PET2 | 50 Gew.% PET9 / 1 Gew% PET3 /49 % PET1 |
| Antimongehalt in ppm | 0 | 0 | 247 |
| Folien SV | 783 | 787 | 785 |
| b* | 0,7 | 0,6 | 0,7 |
| b* nach Ofentest | 0,9 | 6 | 1,2 |
| SV nach Ofentest | 801 | 685 | 781 |
| Reißdehnung MD in % | 140 | 145 | 141 |
| Reißdehnung TD in % | 115 | 116 | 118 |
| Reißdehnung MD in % nach Ofentest | 132 | 55 | 137 |
| Reißdehnung TD in % nach Ofentest | 106 | 28 | 100 |
| Reißfestigkeit MD in $N/mm^2$ | 180 | 178 | 177 |
| Reißfestigkeit TD in $N/mm^2$ | 195 | 191 | 188 |
| Trübunq in % | 5,3 | 5,2 | 5,1 |
| Transparenz in % | 89,2 | 89,1 | 89,4 |
| Trübung in % nach Ofentest | 5,5 | 9,2 | 6,8 |
| Schrumpf MD in % | 1,9 | 1,9 | 1,9 |
| Schrumpf TD in % | 0,8 | 0,8 | 0,8 |
| Garen von Kartoffeln in einem Beutel aus dieser Folie für 70 Minuten im Umluftofen bei 190 °C | Keine Undichtigkeiten und Beutel nicht spröde | Beutel an Siegelnähten undicht und spröde | Keine Undichtigkeiten und Beutel nicht spröde |

Die Rauheit Ra aller Beispiele und Vergleichsbeispiele lag zwischen 55 und 65 nm Die so hergestellten Folien eignen sich zur Herstellung tiefziehfähiger Folienbeutel.

## Patentansprüche

1. Ein- oder mehrschichtige, weniger als 30 ppm Antimon und weniger als 30 ppm Germanium enthaltende, biaxial orientierte Polyesterfolie, welche:

   - eine Reißdehnung von mehr als 50 % in jeder Folienrichtung (MD u. TD) aufweist, gemessen vor einer 90 minütigen Temperaturbehandlung bei 180 °C, wie in der Beschreibung unter "Mechanische Eigenschaften" erläutert,
   - 6 bis 100 µm dick ist,
   - insgesamt zu mehr als 80 Gew.-% aus einem thermoplastischen Polyester besteht der aus Ethylenglykol und Terephthalsäure (= Polyethylenterephthalat, PET) aufgebaut ist und die **dadurch gekennzeichnet ist, dass** sie
   - mindestens eine Schicht - im Falle einer Mehrschichtfolie eine Außenschicht - aufweist, die zu weniger als 95 Mol% aus PET besteht, wobei die restlichen Molprozente Copolyester sind, die Isophthalsäure als Copolyesterkomponente enthalten und diese Schicht mindestens 300 ppm (bezogen auf diese nicht aus Homopolyester bestehende Schicht) eines Radikalfängers enthält, der aus der Gruppe der phenolischen Antioxidantien ausgewählt ist, die das Strukturelement

   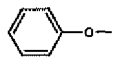

   enthalten wobei die gesamte Folie 50 - 10000 ppm eines Radikalfängers enthält.

2. Polyesterfolie nach Anspruch 1, **gekennzeichnet durch** folgende Eigenschaften nach einer 90 minütigen Temperaturbehandlung bei 180 °C:

   a) einen Folien-SV Wert von mindestens 600
   b) einer Reißdehnung von > 5 % in jeder Folienrichtung
   c) einen Gelbwert b* von kleiner 4 wobei in der Folie als Radikalfänger eine Verbindung mit CAS-Nr. 1709-70-2, 3135-18-0, 6683-19-8 oder 57569-40-1 eingesetzt wird und wobei die genannten Parameter gemessen werden, wie in der Beschreibung unter "Standardviskosität", "Mechanische Eigenschaften" und "Farbkennzahlen"erläutert.

3. Verwendung einer Folie nach Anspruch 1 oder 2 zur Herstellung eines Deckels, Folienbeutels oder -schlauches oder als Metalllaminierfolie.

4. Verwendung nach Anspruch 3, **dadurch gekennzeichnet, dass** die Polyesterfolie

   a) eine Trübung von weniger als 5 % aufweist,
   b) eine Reißfestigkeit in jeder Folienrichtung von mehr als 100 N/mm$^2$ aufweist
   c) einen Gelbwert b* von weniger als 2,5 aufweist
   d) eine Helligkeit L* > 90 aufweist
   e) einen Schrumpf in MD und TD bei 150 ° C von kleiner 2,5 % aufweist
   f) eine Rauheit Ra von größer 40 nm und kleiner 110 nm aufweist, wobei die genannten Parameter gemessen werden, wie in der Beschreibung unter "Trübung", "Mechanische Eigenschaften", "Farbkennzahlen", "Schrumpf" und "Rauigkeit" erläutert.

## Claims

1. Single-layer or multi-layer, biaxially oriented polyester film containing less than 30 ppm antimony and less than 30 ppm germanium, which:

   - has an elongation at break of more than 50 % in each film direction (MD and TD), measured before a 90-minute temperature treatment at 180 °C, as explained in the description under "Mechanical properties",
   - is 6 to 100 µm thick,
   - consists in total to an extent of more than 80 % by weight of a thermoplastic polyester synthesized from ethylene glycol and terephthalic acid (= polyethylene terephthalate, PET)

and which is **characterized in that** it

- has at least one layer - in the case of a multi-layer film, an outer layer - which consists to an extent of less than 95 % by mole of PET, the remaining molar percentages being copolyesters which contain isophthalic acid as a copolyester component, and this layer contains at least 300 ppm (based on this layer not consisting of homopolyester) of a radical scavenger selected from the group of phenolic antioxidants containing the structural element

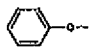,

where the overall film contains 50-10 000 ppm of a radical scavenger.

2. Polyester film according to Claim 1, **characterized by** the following properties after a 90-minute temperature treatment at 180 °C:

a) a film SV value of at least 600
b) an elongation at break of > 5 % in each film direction
c) a yellowness b* of less than 4 where a compound having CAS No. 1709-70-2, 3135-18-0, 6683-19-8 or 57569-40-1 is used as radical scavenger in the film and where the stated parameters are measured as explained in the description under "Standard viscosity", "Mechanical properties" and "Color coordinates".

3. Use of a film according to Claim 1 or 2, for producing a lid, film bag or film tube or as a metal laminating film.

4. Use according to Claim 3, **characterized in that** the polyester film

a) has a haze of less than 5 %,
b) has a tensile strength in each film direction of more than 100 $N/mm^2$
c) has a yellowness b* of less than 2.5
d) has a lightness L* > 90
e) has a shrinkage in MD and TD at 150 °C of less than 2.5 %
f) has a roughness Ra of greater than 40 nm and less than 110 nm, the stated parameters being measured as explained in the description under "Haze", "Mechanical properties", "Color coordinates", "Shrinkage" and "Roughness".

## Revendications

1. Film de polyester monocouche ou multicouche à orientation biaxiale contenant moins de 30 ppm d'antimoine et moins de 30 ppm de germanium, qui :

- présente un allongement à la rupture supérieur à 50 % dans chaque direction de film (MD et TD), mesuré avant un traitement thermique de 90 minutes à 180°C, comme expliqué dans la description sous « Propriétés mécaniques »,
- présente une épaisseur de 6 à 100 μm,
- est constitué pour un total de plus de 80 % en poids d'un polyester thermoplastique qui est composé d'éthylène glycol et d'acide téréphtalique (polyéthylène téréphtalate, PET), et est **caractérisé en ce qu'**il
- présente au moins une couche - une couche extérieure dans le cas d'un film multicouche - qui est constituée de moins de 95 % molaire de PET, dans lequel le pourcentage molaire restant est un copolyester qui contient de l'acide isophtalique comme composant de copolyester et cette couche contient au moins 300 ppm (par rapport à cette couche existante non constituée d'homopolyester) d'un fixateur de radicaux choisi dans le groupe des antioxydants phénoliques contenant l'élément structurel

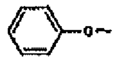,

dans lequel le film entier contient de 50 à 1 000 ppm d'un fixateur de radicaux.

**2.** Film de polyester selon la revendication 1, **caractérisé par** les propriétés suivantes après un traitement thermique de 90 minutes à 180°C :

a) une valeur SV de film d'au moins 600
b) un allongement à la rupture > 5 % dans chaque direction de film
c) un indice de jaunissement b* inférieur à 4

dans lequel dans le film, en tant que fixateur de radicaux, un composé avec CAS no. 1709-70-2, 3135-18-0, 6683-19-8 ou 57569-40-1 est utilisé, et dans lequel les paramètres mentionnés sont mesurés comme expliqué dans la description sous « Viscosité standard », « Propriétés mécaniques » et « Codes de couleur ».

**3.** Utilisation d'un film selon la revendication 1 ou 2 pour la réalisation d'un opercule, d'une poche ou d'un tube en film ou sous la forme d'un film de laminage métallique.

**4.** Utilisation selon la revendication 3, **caractérisée en ce que** le film polyester

a) présente une turbidité inférieure à 5 %,
b) présente une résistance à la rupture dans chaque direction de film supérieure à 100 N/mm2
c) présente un indice de jaunissement b* inférieur à 2,5
d) présente une luminosité L* > 90
e) présente un retrait en MD et TD à 150°C inférieur à 2,5 %
f) présente une rugosité Ra supérieure à 40 nm et inférieure à 110 nm, dans laquelle les paramètres mentionnés sont mesurés comme expliqué dans la description sous « Turbidité », « Propriétés mécaniques », « Codes de couleur », « Retrait » et « Rugosité ».

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2007054698 A
- JP 2007077220 A
- EP 2164079 A
- EP 1942002 A
- DE 102008046780
- DE 102005058910
- DE 102008046780 A
- DE 102005058910 A
- EP 2602283 A2


### In der Beschreibung aufgeführte Nicht-Patentliteratur


- **M. HALDIMANN ; A. BLANC ; V. DUDLER.** *Food Additives and Contaminants,* 2007, vol. 24 (8), 860-868
- **W. SHOTYK ; M. KRACHLER.** *Environ. Sci. Technol.,* 2007, vol. 41 (5), 1560-1563
- *CHEMICAL ABSTRACTS,* 6683-19-8